# EUROPEAN PATENT SPECIFICATION

(11) **EP 3 940 277 B1**
(45) Date of publication and mention of the grant of the patent: **12.11.2025**
(21) Application number: 21185655.4
(22) Date of filing: 14.07.2021
(51) Int. Cl.: F16K 31/383, F16K 31/385, F16K 11/00, F16K 1/52

(54) **WATER OUTLET VALVE WITH FLOW RATE ADJUSTMENT AND FAUCET**
WASSERAUSLASSVENTIL MIT DURCHFLUSSMENGENEINSTELLUNG UND WASSERHAHN
SOUPAPE DE SORTIE D'EAU AVEC RÉGLAGE DE DÉBIT ET ROBINET

(30) Priority: 14.07.2020 CN 202010674948
(43) Date of publication of application: 19.01.2022
(73) Proprietor: Xiamen Solex High-Tech Industries Co., Ltd., Xiamen, Fujian 361028 (CN)
(72) Inventor: WEI, Zhijian, Xiamen, 361028 (CN); LIN, Fangqi, Xiamen, 361028 (CN); HU, Lihong, Xiamen, 361028 (CN); YANG, Jianhong, Xiamen, 361028 (CN); ZHAO, Zhenwen, Xiamen, 361028 (CN)
(74) Representative: Verscht, Thomas Kurt Albert

(56) References cited:
- WO-A1-2017/144169
- CN-U- 206 468 841
- JP-A- 2008 256 055
- US-A1- 2009 146 090
- US-A1- 2019 338 863
- US-B2- 10 458 567

## Description

### FIELD OF THE DISCLOSURE

The present disclosure relates to sanitary wares, in particular relates to a push water outlet valve core.

### BACKGROUND OF THE DISCLOSURE

The existing push valve cores all adopt an automatic pen ratchet wheel structure. A general automatic pen ratchet wheel structure comprises a pressing rod, a movable ratchet wheel and a fixed ratchet wheel; the pressing rod moves upward and downward in an axial direction, and the movable ratchet wheel is configured to move upward and downward in the axial direction and rotate about an axis; the fixed ratchet wheel is generally disposed on a housing to provide height restriction with respect to a movement of the movable ratchet; a working spring abuts the movable ratchet wheel, the pressing rod is separated from the movable ratchet wheel to enable the pressing rod to be maintained in a suspended state to generate a certain shaking, and a relatively high height is required. Therefore, at present, the height of the water outlet valve is generally relatively high and cannot be effectively reduced, the structure cannot be more compact, and the structure is loose.

From US 2009/146 090 A1 a pilot-type water discharging/stopping and flow regulating valve device is known capable of performing both the discharging/stopping of water and the regulation of flow by light operations, and capable of, once the flow is regulated, discharging the water at a pre-regulated specified flow in the next water discharge even if the water is stopped. The pilot type water discharging/stopping and flow regulating valve device has a main valve, a back pressure chamber, an introducing small hole, a pilot channel and a flow regulating mechanism.

From US 2019/338 863 A1 a valve for a flush-mounted body of a sanitary fitting is known, at least having a valve housing with a longitudinal axis, a rotatable flow control element for adjusting a flow volume of a liquid flowing through the valve, and a valve knob for opening and closing the valve. The valve knob can be adjusted via the flow control element, rotationally and parallel to the longitudinal axis, by a control knob for the valve, and the control knob is fastened to the valve knob by a rotary coupling so that the control knob can be non-rotatably fastened relative to the valve housing.

From WO 2017/144 169 A1 a valve-actuating device is known comprising a compensating device formed between a manual operating element and a control element, by means of which a valve can be adjusted between an open position and a closed position. The compensating device is used to drive the control element relative to the manual operating element, counter to a restoring force of a restoring element, towards or away from said manual operating element, the restoring element being arranged outside the compensating device, and/or a lifter is arranged on the control element and is guided in a receiving portion of the compensating device.

### BRIEF SUMMARY OF THE DISCLOSURE

The technical problems of the present disclosure is to provide a water outlet valve with flow rate adjustment, which can both function an on-off operation of water and flow rate adjustment and is suitable to be used to a single handle or two handles.

In order to solve the technical problems, the present disclosure provides a water outlet valve with flow rate adjustment, which comprises a valve body, a central rod, a rotating push switch, a flow rate adjusting member and a sealing member;
the rotating push switch is interlocked to and cooperates with the central rod in an axial direction, and the rotating push switch is interlocked to the flow rate adjusting member about the axial direction; the flow rate adjusting member enables a rotation movement about the axial direction to be converted into an up-down movement of the central rod in the axial direction;
when the rotating push switch drives the central rod to move to a higher position or a lower position, the sealing member opens or closes a water outlet passage of the valve body; when the rotating push switch or the flow rate adjusting member rotates, the flow rate adjusting member drives the central rod to move upward and downward in the axial direction, and a water passage area of the water outlet passage becomes larger or smaller accordingly; and
the central rod, the flow rate adjusting member and the rotating push switch are coaxial and disposed from an inner side to an outer side,
wherein the central rod is arranged into a pressing shaft and a movable shaft; the movable shaft is encompassed by a water opening spring, when the rotating push switch is in the lower position, the water opening spring is compressed, and
wherein the pressing shaft is encompassed by a water closing spring; when the rotating push switch is in the lower position, the pressing shaft abuts the movable shaft, and the water closing spring is compressed; an elastic reset force of the water closing spring is greater than an elastic reset force of the water opening spring.

In a preferred embodiment, which further comprises a lower position positioning member;
the rotating push switch moves between the higher position and the lower position in the axial direction; the rotating push switch comprises an operating member and a rotating converting member; the rotating converting member comprises a converting member configured to cooperate with the lower position positioning member and a limiting member configured to be locked to the lower position positioning member; the lower position positioning member comprises a limiting matching member and a converting matching member disposed up and down in the axial direction and a passage penetrating in the axial direction; and
when the operating member is in the higher position, the limiting member is aligned with the passage, and the converting member is separated from the converting matching member by a preset distance in the axial direction; when the rotating push switch is in the lower position, the limiting member passes through the passage, and the converting member cooperates with the converting matching member to drive the lower position positioning member to rotate by a preset angle about the axial direction, so that the limiting member and the limiting matching member is upwardly limited in the axial direction.

According to a reference example, the lower position positioning member comprises a ratchet wheel slide rail member and a lower ratchet wheel disposed on a fixed base; the rotating converting member is an upper ratchet wheel; and the rotating converting member and the converting matching member define first ratchet inclined surfaces.

According to a reference example, an inner side wall of the ratchet wheel slide rail member is separately disposed with ratchet tooth blocks in a circumferential direction, and the passage is defined between two adjacent ratchet tooth blocks; and
a side of the ratchet tooth blocks facing the upper ratchet wheel is disposed with the first ratchet inclined surface.

According to a reference example, the limiting member and the limiting matching member define second ratchet inclined surfaces; and a side of the ratchet tooth blocks away from the rotating push switches is disposed with the second ratchet wheel inclined surface.

According to a reference example, a plurality of ribs is disposed on the upper ratchet wheel in the circumferential direction and is disposed above the first ratchet wheel slide rail member in the axial direction; upper surfaces of the ribs in the axial direction is disposed with the second ratchet wheel inclined surface.

According to a reference example, the flow rate adjusting member comprises an inner threaded screw rod and an outer threaded screw rod, and the outer threaded screw rod and the ratchet wheel slide rail member are limited and connected along a rotation direction of the inner threaded screw rod.

In a preferred embodiment, which further comprises a working spring, one end of the working spring is a fixed end, and the other end abuts the rotating push switch; when the rotating push switch is in the lower position or the higher position, the working spring is always in a compressed state.

In a preferred embodiment, the sealing member comprises a pressure bearing base and a rubber cup seal, when the rotating push switch moves the lower position, a pressure releasing hole of the pressure bearing base is closed by the central rod, a pressure of water stored in a pressure suppression chamber between the rubber cup seal and the valve body increases, thereby driving the rubber cup seal to move downward in the axial direction of the valve body to close the water outlet passage;
when the rotating push switch moves to the higher position, the central rod opens the pressure releasing hole of the rubber cup seal, and a pressure of water releasing from the pressure suppression chamber between the rubber cup seal and the valve body decreases, thereby driving the rubber cup seal to move upward in the axial direction of the valve body to open the water outlet passage;
the rubber cup seal does not deform after the pressure releasing hole is opened.

In a preferred embodiment, the movable shaft is interlocked to the pressure bearing base disposed with the rubber cup seal, and when the movable shaft moves upward, the pressure bearing base drives the rubber cup seal to open the water outlet passage.

In a preferred embodiment, the lower position positioning member is a rotating ratchet wheel; the rotating converting member is a fixed ratchet wheel; the rotating converting member and the converting matching member define first ratchet wheel inclined surfaces.

In a preferred embodiment, an outer side wall of the rotating ratchet wheel is separately disposed with ratchet tooth blocks in a circumferential direction, the passage is defined between two adjacent ratchet tooth blocks, and a side of the ratchet tooth blocks facing the fixed ratchet wheel is disposed with the first ratchet wheel inclined surface.

In a preferred embodiment, the limiting member and the limiting matching member define second ratchet wheel inclined surfaces; and a side of the ratchet tooth blocks away from the rotating push switch is disposed with the second ratchet wheel inclined surface.

In a preferred embodiment, the second ratchet wheel inclined surface is disposed on the fixed ratchet wheel and is disposed below the first ratchet wheel inclined surface in the axial direction.

According to a reference example, the flow rate adjusting member comprises an inner threaded screw rod and an outer threaded screw rod, and the outer threaded screw rod and the ratchet wheel slide rail member are limited and connected along a rotation direction of the inner threaded screw rod.

In a preferred embodiment, the sealing member comprises a pressure bearing base and a rubber cup seal, and when the rotating push switch moves to the lower position, a pressure releasing hole of the pressure bearing base is closed by the movable shaft, and a pressure of water stored in the pressure suppression chamber between the rubber cup seal and the valve body increases, thereby driving the rubber cup seal to move downward along the axial direction of the valve body to close the water outlet passage;
when the rotating push switch moves to the higher position, the movable shaft opens the pressure releasing hole of the rubber cup seal, and a pressure of water releasing from the pressure suppression chamber between the rubber cup seal and the valve body decreases, thereby driving the rubber cup seal to move upward in the axial direction of the valve body to open the water outlet passage; and
the rubber cup does not deform after the pressure releasing hole is opened.

The present disclosure provides a faucet, which is disposed with the water outlet valve with flow rate adjustment.

In a preferred embodiment, the faucet is a fixed faucet or a pull-out faucet.

Compared with the existing techniques, the technical solution has the following advantages.
1. The present disclosure provides a water outlet valve with flow rate adjustment, as the central rod, the rotating converting member and the flow rate adjusting member are coaxial and disposed from an inner side to an outer side, this arrangement can reduce a height of the valve core and a diameter of the valve core. In the conventional water outlet valve, the central rod is disposed below the ratchet wheel, therefore, heights of the central rod and the ratchet wheel should be added up, and the height of the valve core is relatively high.
2. The present disclosure provides the water outlet valve with flow rate adjustment, a ratchet wheel and a ratchet wheel slide rail member disposed up and down can be used to replace the conventional automatic pen structure, which further reduces a height and the number of components.
3. The present disclosure provides the water outlet valve with flow rate adjustment, the central rod is lifted up to drive the sealing member to move upward, a situation that the valve can not be opened in low pressure is avoided in the conventional water outlet valve in which the sealing member is opened only due to water pressure.
4. The present disclosure provides the water outlet valve with flow rate adjustment, both the operating member and the flow adjusting member can rotate to realize flow rate adjustment, so it can be used to a single-handle or double-handle faucet.

### BRIEF DESCRIPTION OF THE DRAWINGS

In order to clearly describe the technical solutions of the embodiments of the present disclosure, the drawings used for the embodiments will be briefly described below. It is obvious that the drawings described below are merely some embodiments of the present disclosure. Other drawings can be obtained based on the drawings by those skilled in the art without creative work.
Fig. 1 illustrates a perspective view of a faucet in an example of the present disclosure not forming part of the claimed invention;
Fig. 2 illustrates an exploded view of core components of a water outlet valve in the Reference Example 1 of the present disclosure not forming part of the claimed invention;
Fig. 3 illustrates a cross-sectional view of the water outlet valve being in a closed state in the Reference Example 1 of the present disclosure;
Fig. 4 illustrates a cross-sectional view of the water outlet valve being in an opened state in the Reference Example 1 of the present disclosure;
Fig. 5 illustrates a cross-sectional view of a water outlet valve being in the opened state in a Reference Example 2 of the present disclosure not forming part of the claimed invention;
Fig. 6 illustrates an exploded view of core components of a water outlet valve in a preferred Embodiment 3 of the present disclosure;
Fig. 7 illustrates a cross-sectional view of the water outlet valve being in a closed state in the preferred Embodiment 3 of the present disclosure; and
Fig. 8 illustrates a cross-sectional view of the water outlet valve being in an opened state in the preferred Embodiment 3 of the present disclosure.

### DETAILED DESCRIPTION OF THE EMBODIMENTS

The technical solutions of the embodiments of the present disclosure will be clearly and completely described below in combination with the drawings in embodiments of the present disclosure. It is obvious that the embodiments described below are merely some embodiments of the present disclosure rather than all embodiments. It is intended that the scope of the present disclosure cover all other embodiments obtained based on the embodiments of the present disclosure by those skilled in the art without creative work.

### Reference Example 1

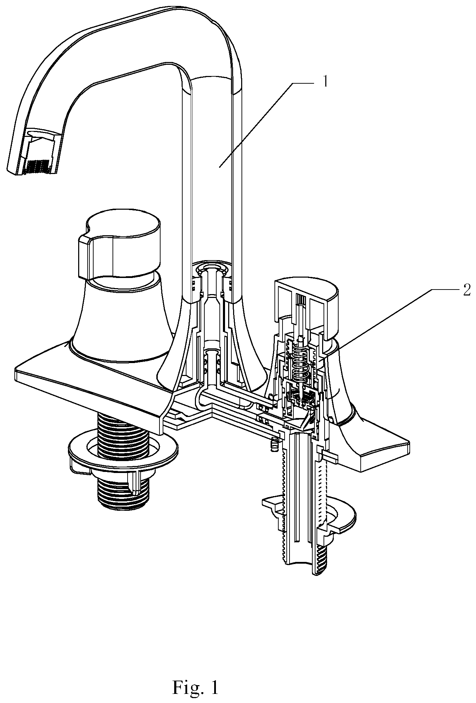

Referring to Fig. 1, this embodiment provides a water outlet faucet, the faucet comprises a faucet body 1 and a water outlet valve 2 with flow rate adjustment disposed on the faucet body 1. In this embodiment, the water outlet faucet is a fixed faucet, and it can also be a pull-out faucet as a simple replacement.

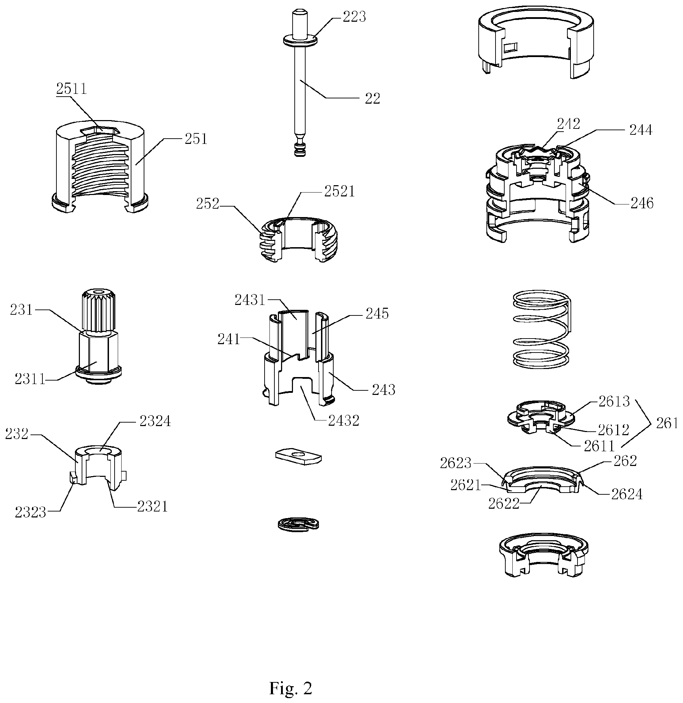

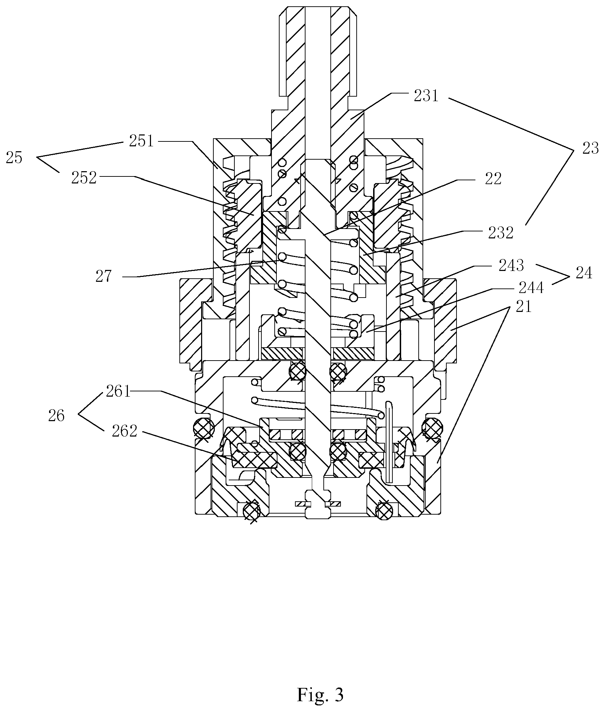

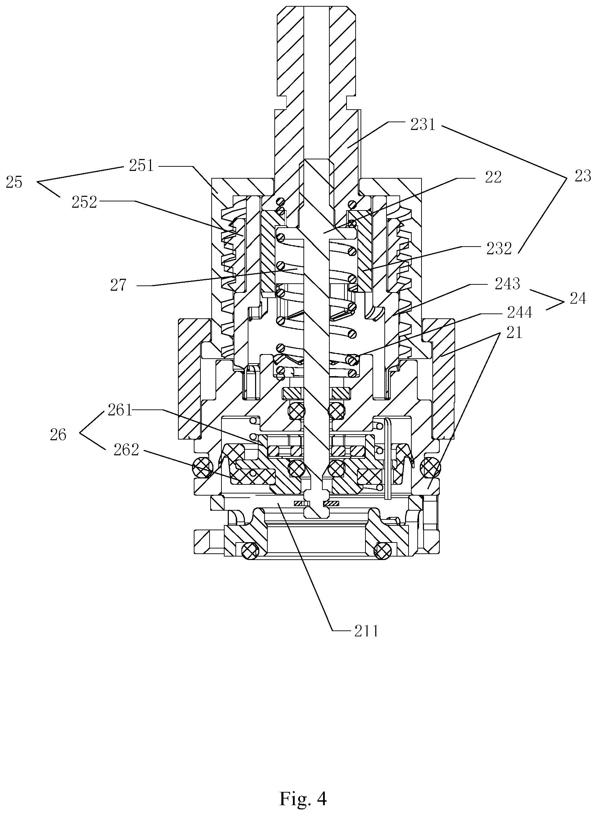

Referring to Figs. 2-4, the water outlet valve 2 with flow rate adjustment comprises a valve body 21, a central rod 22, a rotating push switch 23, a lower position positioning member 24, a flow rate adjusting member 25 and a sealing member 26.

The rotating push switch 23 moves between a higher position and a lower position in an axial direction. The rotating push switch 23 comprises an operating member 231 and a rotating converting member 232, and the rotating converting member 232 comprises a converting member configured to be cooperate with the lower position positioning member 24 and a limiting member 2323 configured to be locked to the lower position positioning member 24. The converting member in this embodiment is preferably lower inclined teeth 2321.

The lower position positioning member 24 comprises a limiting matching member 241 and a converting matching member 242 disposed up and down in the axial direction and a passage 245 penetrating in the axial direction.

When the operating member is in the higher position, the limiting member 2323 is aligned with the passage 245, the lower inclined teeth 2321 are separated from the converting matching member 242 by a preset distance in the axial direction. When the rotating push switch 23 is in the lower position, the limiting member 2323 passes through the passage 245, the lower inclined teeth 2321 cooperates with the converting matching member 242 to drive the lower position positioning member 24 to rotate by a preset angle about the axial direction, so that the limiting member 2323 and the limiting matching member 241 are upwardly limited in the axial direction.

The operating member 231 is interlocked to and cooperates with the central rod 22 in the axial direction, and the flow rate adjusting member 25 enables a rotation movement about the axial direction to be converted into an up and down movement of the central rod 22 in the axial direction.

When the operating member 231 moves downward to drive the central rod 22 to move to the higher position or the lower position, the sealing member 26 opens or closes a water outlet passage 211 of the valve body 21. When the operating member 231 rotates to drive the flow rate adjusting member 25 to rotate so as to drive the central rod 22 to move upward and downward in the axial direction, a water passage area of the water outlet passage 211 becomes larger or smaller accordingly.

The central rod 22, the rotating converting member 232 and the flow rate adjusting member 25 are coaxial and disposed for an inner side to an outer side.

In this embodiment, the operating member 231 is not only configured to move upward and downward but configured to drive the flow rate adjusting member 25 to rotate, so a spline rod is selected as the operating member 231. The central rod 22, the rotating converting member 232 and the flow rate adjusting member 25 are coaxial and disposed for the inner side to the outer side. This arrangement can reduce a height of the valve core and a diameter of the valve core. In the convectional water outlet valve, the central rod 22 is disposed below a ratchet wheel, so that heights of the central rod 22 and the ratchet wheel should be added up, and the height of the valve core is relatively higher.

In this embodiment, the lower position positioning member 24 comprises a ratchet wheel slide rail member 243 and a lower ratchet wheel 244 disposed on a fixed base 246. The rotating converting member 232 is an upper ratchet wheel, and the rotating converting member 232 and the converting matching member 242 define first ratchet wheel inclined surfaces.

An inner side wall of the ratchet wheel slide rail member 243 is separately disposed with ratchet tooth blocks 2431 along a circumferential direction, and the passage 245 is defined between two adjacent ratchet tooth blocks 2431. A side of the ratchet tooth blocks 2431 facing an upper ratchet wheel is disposed with the first ratchet wheel inclined surface (i.e., one of the first ratchet wheel inclined surfaces).

The limiting member 2323 and the limiting matching member 241 define second ratchet wheel inclined surfaces. A side of the ratchet tooth blocks 2431 away from the rotating push switch 23 is disposed with the second ratchet wheel inclined surface (i.e., one of the second ratchet wheel inclined surfaces). The limiting member 2323 is separately disposed along a circumferential direction of the upper ratchet wheel. An upper surface of the limiting member 2323 disposed in the axial direction is disposed with the second ratchet wheel inclined surface (i.e., another one of the second ratchet wheel inclined surfaces).

When the operating member 231 is pressed and moves from the higher position to the lower position, the first ratchet wheel inclined surfaces of the upper ratchet wheel and the lower ratchet wheel 244 abuts and cooperates with each other. As the lower ratchet wheel 244 is fixed, the upper ratchet wheel will rotate by an angle of a ratchet tooth. When the lower ratchet wheel 244 moves downward, a reset spring is compressed to accumulate an elastic reset force. When the upper ratchet wheel rotates by the angle of the ratchet tooth, an abutting force between the upper ratchet wheel and the lower ratchet wheel 244 disappears, and the reset spring will push the upper ratchet wheel to move upward. Therefore, the limiting member 2323 and the limiting matching member 241 cooperate with each other, and the upper ratchet wheel can be fixed in the lower position. Then, when the spline rod is pressed again, the upper ratchet wheel abuts and cooperates with the lower ratchet wheel 244 again and rotates by the angle of the ratchet tooth again, so that ribs 233 of the upper ratchet wheel are aligned with the passage 245. Therefore, the limiting member 2323 can pass through the passage 245 due to the elastic reset force of the reset spring, resulting in the upper ratchet wheel resetting to the higher position. A work cycle is complete. A total size of the valve core becomes smaller and parts is fewer due to this structure.

In this embodiment, the flow rate adjusting member 25 comprises an inner threaded screw rod 251 and an outer threaded screw rod 252, and the outer threaded screw rod 252 is limited and connected to the ratchet wheel slide rail member 243 along a rotation direction of the inner threaded screw rod 251. In order to realize a limiting connection between the two, the ratchet wheel slide rail member 243 is disposed with a locking groove 2432, and the outer threaded screw rod 252 is disposed with a pushing member 2521 configured to be engaged with the locking groove 2432.

Therefore, when the operating member 231 rotates, the central rod 22 moves downward due to a cooperation of multi threads. The central rod 22 moves downward to abut the sealing member 26 to enable the sealing member 26 to move downward. As the sealing member 26 is in a pressure balance state, at this time, where the central rod 22 is disposed, where the sealing member 26 is disposed, and the flow rate adjustment is achieved.

A lower end of the operating member 231 is disposed with a rotating member 2311, and the inner threaded screw rod 251 further comprises a rotating matching member 2511. In this embodiment, the rotating member 2311 and the rotating matching member 2511 are hexagonal structures. When the operating member 231 rotates clockwise, the rotating member 2311 cooperates with and interlocked to the rotating matching member 2511 to drive the inner threaded screw rod 251 to rotate clockwise. When the inner threaded screw rod 251 rotates clockwise to force the outer threaded screw rod 252 to move downward, the pushing member 2521 pushes the limiting member 2323 to move downward, thereby driving the rotating converting member 232 to move downward.

The rotating converting member 232 further comprises a convex ring 2324 protruding inward, and the central rod 22 further comprises an annular protruding platform 223 configure to cooperate with the convex ring 2324. When the rotating converting member 232 moves downward, the convex ring 2324 abuts the protruding platform 223 to drive the central rod 22 to move downward. The central rod 22 moves downward to drive the sealing member 26 to move downward, therefore, a distance between the sealing member 26 and a base 30 is reduced, the water outlet passage 211 becomes smaller, and flow rate is reduced. This embodiment further comprises a working spring 27, one end of the working spring 27 is a fixed end, and another end abuts the rotating push switch 23. When the rotating push switch 23 is in the lower position or the higher position, the working spring 27 is always in a compressed state. In this way, the rotating push switch 23 will not shake.

When the flow rate needs to be increased, the operating member 231 rotates counterclockwise, the rotating member 2311 cooperates with the rotating matching member 2511 to drive the inner threaded screw rod 251 to rotate counterclockwise. When the inner threaded screw rod 251 rotates counterclockwise to drive the outer threaded screw rod 252 to move upward, the pushing member 2521 is separated from the limiting member 2323, and the rotating converting member 232 and the central rod 22 move upward due to the working spring 27. Therefore, a downward force of the central rod 22 applied on the sealing member 26 is released, the sealing member 26 moves upward due to water pressure, and the flow rate is increased.

As described above, the operating member 231 rotates to drive the central rod 22 to move upward and downward to adjust the flow rate. In this solution, consumers can also operate the inner threaded screw rod 251 to rotate to drive the central rod 22 to move upward and downward to adjust the flow rate. Therefore, the water outlet valve 2 is suitable for a single-handle faucet and a double-handle faucet. When the water outlet valve 2 is used to the single-handle faucet, consumers can press a single handle to achieve an on-off operation of water or rotate the single handle to adjust the flow rate. When the water outlet valve 2 is used to the double-handle faucet, one of the handles is pressed to achieve the on-off operation of water, and another handle rotates to adjust the flow rate.

In this embodiment, the sealing member 26 comprises a pressure bearing base 261 and a rubber cup seal 262. When the rotating push switch 23 moves to the lower position, as the central rod 22 has a contraction portion having a reduced diameter, when the central rod 22 moves downward, the contraction portion moves out of a pressure releasing hole of the pressure bearing base 261, the pressure releasing hole is closed, a pressure of water stored in a pressure suppression chamber between the rubber cup seal 262 and the valve body 21 increases, so that the rubber cup seal 262 moves downward in the axial direction of the valve body 21 to close the water outlet passage 211.

When the rotating push switch 23 moves to the higher position, the central rod 22 moves upward, and the contraction portion moves to an inner side of the pressure releasing hole of the pressure bearing base 261 to open the pressure relief hole, and a pressure of water releasing from the pressure suppression chamber between the rubber cup seal 262 and the valve body 21 decreases, so that the rubber cup seal 262 moves upward in the axial direction of the valve body 21 to open the water outlet (e.g., the water outlet passage 211). In this embodiment, the rubber cup seal 262 does not deform after the pressure releasing hole is opened. As the rubber cup seal 262 does not deform after the pressure is released, there is no need to bend the rubber cup seal 262, and this structure can effectively reduce a diameter and a size of the valve core. In addition, in this embodiment, the central rod 22 is disposed with a buckle groove configured to be interlocked to the pressure bearing base. When the central rod 22 moves upward, the pressure bearing base 261 can be lifted upward, which solves a problem that cannot be opened in a low pressure.

In detail, the rubber cup seal 262 comprises a bottom wall 2621, and the bottom wall comprises a central hole 2622. A bottom of the pressure bearing base 261 is disposed with an annular protruding platform 2611, and an outer side wall of the annular protruding platform is disposed with an outer annular groove 2612. The annular protruding platform 2611 passes through the central hole 2622, so that the bottom wall 2621 of the rubber cup seal 262 is disposed in the outer annular groove 2612. An inner wall of the rubber cup seal 262 is disposed with an inner annular groove 2623, and a top of the outer side wall of the rubber cup seal 262 is disposed with a side wing 2624 enlarged gradually and downwardly. The side wing 2624 and a side wall of the rubber cup seal 262 define an inverted V-shaped structure. A middle portion of the pressure bearing base 261 is disposed with an annular protruding ring 2613 configured to cooperate with the inner annular groove 2623, so that the rubber cup seal 262 is fixed on the pressure bearing base 261. When the pressure bearing base 261 moves upward and downward, the rubber cup seal 262 moves upward and downward accordingly, and the side wing 2624 of the rubber cup seal 262 cooperates with the valve body 21 to define a side seal and is configured to move relative to the valve body 21.

### Reference Example 2

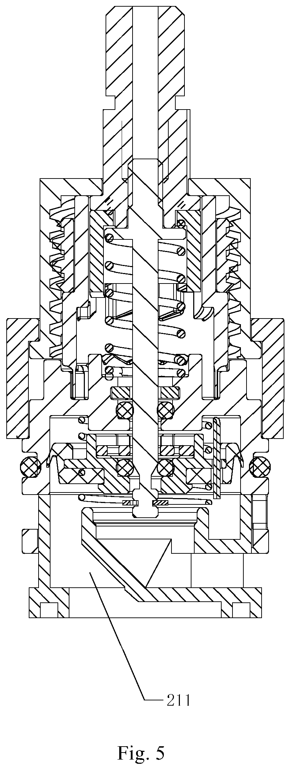

Referring to Fig. 5, this example differs from Example 1 in that a shape of the water outlet passage 211 is slightly different, and the rest of the structure is the same and will not be further described here.

### Embodiment 3

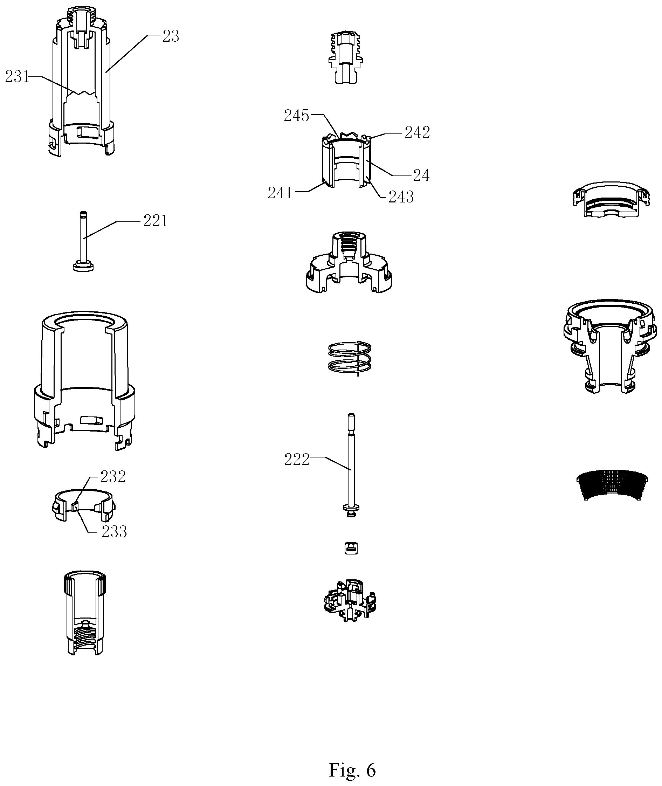

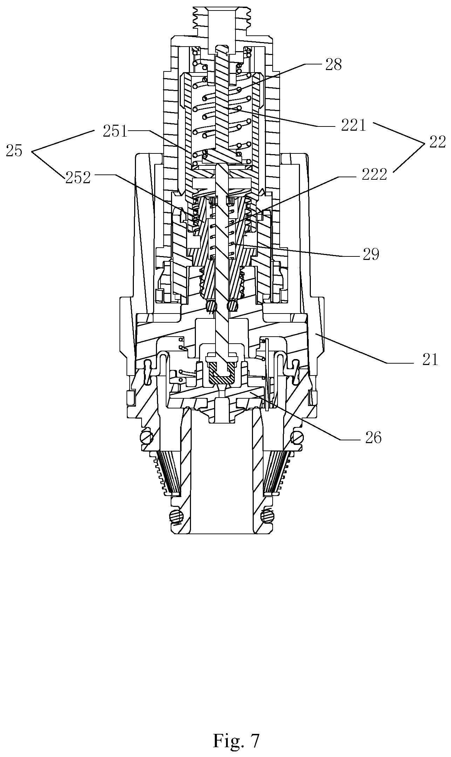

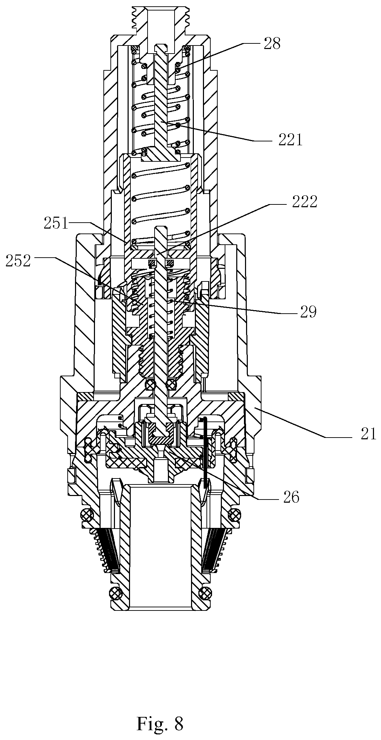

Referring to Figs. 6-8, a water outlet valve with flow rate adjustment in this embodiment comprises a valve body 21, a central rod 22, a rotating push switch 23, a lower position positioning member 24, a flow rate adjusting member 25 and a sealing member 26.

The rotating push switch 23 moves between a higher position and a lower position in an axial direction. The rotating push switch 23 comprises a rotating converting member 231 configured to cooperate with the lower position positioning member 24 and a limiting member 232 configured to be locked to the lower position positioning member 24.

The lower position positioning member 24 comprises a limiting matching member 241 and a converting matching member 242 disposed up and down in the axial direction and a passage 245 penetrating in the axial direction.

When the rotating push switch 23 is disposed in the higher position, the limiting member 232 is aligned with the passage 245, and the reversing member is separated from the converting matching member 242 by a preset distance in the axial direction. When the rotating push switch 23 is disposed in the lower position, the limiting member 232 passes through the passage 245, the converting member cooperates with the converting matching member 242 to drive the lower position positioning member 24 to rotate by a preset angle about the axial direction (e.g., a central axis), so that the limiting member 232 and the limiting matching member 241 are upwardly limited in the axial direction.

The rotating push switch 23 is interlocked to and cooperated with the central rod 22 in the axial direction, and the rotating push switch 23 is interlocked to and cooperated with the flow rate adjusting member 25 along a rotation direction, and the flow rate adjusting member 25 enables a rotation movement about the axial direction be converted into an up and down movement of the central rod 22 in the axial direction.

When the rotating push switch 23 drives the central rod 22 to move to the higher position or the lower position, the sealing member 26 opens or closes the water outlet passage 211 of the valve body 21. When the flow rate adjusting member 25 drives the central rod 22 to move upward and downward in the axial direction, a water passing area of the water outlet passage 211 becomes larger or smaller accordingly.

The central rod 22, the flow rate adjusting member 25 and the rotating converting member 231 are coaxial and disposed from an inner side to an outer side.

In this embodiment, positions of the rotating converting member 231 and the flow rate adjusting member 25 are exchanged, and the lower position positioning member 24 defines a rotating ratchet wheel. The rotating converting member 231 is a fixed ratchet wheel. The rotating converting member 231 and the converting matching member 242 define first ratchet wheel inclined surfaces. That is, that the upper ratchet wheel rotates and the lower ratchet wheel does not move in Embodiment 1 is changed into that the fixed ratchet wheel does not move and the rotating ratchet wheel rotates.

In detail, an outer side wall of the rotating ratchet wheel is separately disposed with ratchet tooth blocks 243 in a circumferential direction, and the passage 245 is defined between two adjacent ratchet tooth blocks 243. A side of the ratchet tooth blocks 243 facing the fixed ratchet wheel is disposed with the first ratchet wheel inclined surface (i.e., one of the first ratchet wheel inclined surfaces).

The limiting member 232 and the limiting matching member 241 define second ratchet wheel inclined surfaces. A side of the ratchet tooth blocks 243 away from the rotating push switch 23 is disposed with the second ratchet wheel inclined surface (i.e., one of the second ratchet wheel inclined surfaces).

When the rotating push switch 23 moves from the higher position to the lower position, the first ratchet wheel inclined surfaces of the fixed ratchet wheel and the rotating ratchet wheel will abut and cooperate with each other. As the fixed ratchet wheel is fixed and does not move, the rotating ratchet wheel will rotate by an angle of a ratchet tooth. When the fixed ratchet wheel moves downward, a reset spring is compressed to accumulate an elastic reset force. When the rotating ratchet wheel rotates by the angle of the ratchet tooth, an abutting force between the fixed ratchet wheel and the rotating ratchet wheel disappears, and the reset spring will push the fixed ratchet wheel to move upward. Therefore, the limiting member 232 and the limiting matching member 241 cooperate with each other, and the fixed ratchet wheel can be fixed in the lower position. Then, when the rotating push switch 23 is pressed again, the fixed ratchet wheel abuts and cooperates with the rotating ratchet wheel again, the rotating ratchet wheel rotates by the angle of the ratchet tooth again, so that ribs 233 of the fixed ratchet wheel is aligned with the passage 245. Therefore, the ribs 233 can pass through the passage 245 due to the elastic reset force of the reset spring, and the fixed ratchet wheel can reset to the higher position. A work cycle is complete.

The second ratchet wheel inclined surface is disposed on the fixed ratchet wheel and is disposed below the first ratchet wheel inclined surface in the axial direction. **In** this embodiment, the rotating push switch 23 is a pressing rotating rod, the first ratchet wheel inclined surface is disposed on an inner wall of the pressing rotating rod, and the second ratchet wheel inclined surface is disposed below the first ratchet wheel inclined surface.

According to the invention, the central rod 22 is arranged into a pressing shaft 221 and a movable shaft 222. The movable shaft 222 is encompassed by a water opening spring 29, and when the rotating push switch 23 is in the lower position, the water opening spring 29 is compressed. The pressing shaft 221 is encompassed by a water closing spring 28. When the rotating push switch 23 is in the lower position, the pressing shaft 221 abuts the movable shaft 222, and the water closing spring 28 is compressed. An elastic reset force of the water closing spring 28 is greater than an elastic reset force of the water opening spring 29.

The central rod 22 is arranged into two parts. The pressing shaft 221 is disposed with a buckle groove configured to cooperate with a blocking ring of an opening to enable the water closing spring 28 to be limited in location. The water closing spring 28 functions to enable the pressing shaft 221 to be maintained in a downward state. A force of the water closing spring 28 applying on the pressing shaft 221 is always downward. The movable shaft 222 is disposed with a buckle groove configured to cooperate with the blocking ring of the opening to enable the water opening spring 29 to be limited in location. At this time, the water opening spring 29 always acts on the movable shaft 222 to drive the movable shaft 222 to move upward. When the water is opened, the movable shaft is lifted up to open a pressure releasing hole to release pressure, thereby opening a pressure bearing base. When the pressing shaft 221 moves downward, the pressing shaft 221 abuts and cooperates the movable shaft 222, and the pressing shaft 221 drives the movable shaft 222 to move downward until the movable shaft 222 is sealed with a base. At this time, a force applied on the movable shaft 222 due to the spring disposed on the movable shaft 222 is upward. Upward while the water is opened is converted into downward while the water is closed. This method is used to enable the movable shaft 222 and the pressure bearing base to define a better fit in a low pressure, so as to solve water leakage problems in the low pressure.

The above-mentioned operation method has a light press force value. As the central rod 22 is arranged into two parts, and the press force value is always a force value of the spring regardless water pressure and will not change. The pressing shaft 221 disposed on an operating end is separated from the movable shaft 222 disposed on a sealing end. The water is always closed by the movable shaft 222, and the user always operates the pressing shaft 221. Therefore, the user's force for each pressing operation is constant regardless the water pressure,.

In the description of this specification, the description with respect to the terms "one embodiment", "example", "specific example", etc. is that the specific feature, structure, material or characteristic described in combination with the embodiment or example is comprised in at least one embodiment or example of the present disclosure. In this specification, the schematic description of the above-mentioned terms do not necessarily refer to the same embodiment or example. Moreover, the described specific features, structures, materials or characteristics can be combined in any one or more embodiments or examples in a suitable manner.

The invention may be summarized as follows: The present disclosure discloses a water outlet valve with flow rate adjustment, which comprises a valve body, a central rod, a rotating push switch, a flow rate adjusting member and a sealing member; the rotating push switch is interlocked to and cooperates with the central rod in an axial direction, and the rotating push switch is interlocked to the flow rate adjusting member about the axial direction; the flow rate adjusting member enables a rotation movement about the axial direction to be converted into an up-down movement of the central rod in the axial direction; when the rotating push switch drives the central rod to move to a higher position or a lower position, the sealing member opens or closes a water outlet passage of the valve body; when the rotating push switch or the flow rate adjusting member rotates, the flow rate adjusting member drives the central rod to move upward and downward in the axial direction, and a water passage area of the water outlet passage becomes larger or smaller accordingly; and the central rod, the rotating push switch and the flow rate adjusting member are coaxial and disposed from an inner side to an outer side. The present disclosure further discloses a faucet disposed with the water outlet valve with flow rate adjustment.

The above-mentioned preferred published embodiments of the present disclosure merely help to describe the present disclosure. The preferred embodiment does not describe all details, and the embodiments of the disclosure is not only limited thereto. It is obvious that many modifications and variations can be made according to the specification. The embodiments selected and further described in this specification better explain the principles and practical applications of the present disclosure, so that those skilled in the art can well understand and utilize the present disclosure. The present disclosure is only limited by the claims.

## Claims

1. A water outlet valve (2) with flow rate adjustment, comprising a valve body (21), a central rod (22), a rotating push switch (23), a flow rate adjusting member (25) and a sealing member (26);
the rotating push switch (23) is interlocked to and cooperates with the central rod (22) in an axial direction, and the rotating push switch (23) is interlocked to the flow rate adjusting member (25) about the axial direction; the flow rate adjusting member (25) enables a rotation movement about the axial direction to be converted into an up-down movement of the central rod (22) in the axial direction;
when the rotating push switch (23) drives the central rod (22) to move to a higher position or a lower position, the sealing member (26) opens or closes a water outlet passage of the valve body (21); when the rotating push switch (23) or the flow rate adjusting member (25) rotates, the flow rate adjusting member (25) drives the central rod (22) to move upward and downward in the axial direction, and a water passage area of the water outlet passage becomes larger or smaller accordingly; and
the central rod (22), the flow rate adjusting member (25) and the rotating push switch (23) are coaxial and disposed from an inner side to an outer side,
**characterized in that**
the central rod (22) is arranged into a pressing shaft (221) and a movable shaft (222); the movable shaft (222) is encompassed by a water opening spring (29), when the rotating push switch (23) is in the lower position, the water opening spring (29) is compressed, and
wherein the pressing shaft (221) is encompassed by a water closing spring (28); when the rotating push switch (23) is in the lower position, the pressing shaft (22) abuts the movable shaft (222), and the water closing spring (28) is compressed; an elastic reset force of the water closing spring (28) is greater than an elastic reset force of the water opening spring (29).

2. The water outlet valve (2) with flow rate adjustment according to claim 1, which further comprises a lower position positioning member (24);
the rotating push switch (23) moves between the higher position and the lower position in the axial direction; the rotating push switch (23) comprises an operating member (231) and a rotating converting member (232); the rotating converting member (232) comprises a converting member configured to cooperate with the lower position positioning member (24) and a limiting member configured to be locked to the lower position positioning member (24); the lower position positioning member (24) comprises a limiting matching member (241) and a converting matching member (242) disposed up and down in the axial direction and a passage (245) penetrating in the axial direction; and
when the operating member (231) is in the higher position, the limiting member is aligned with the passage (245), and the converting member is separated from the converting matching member (242) by a preset distance in the axial direction; when the rotating push switch (23) is in the lower position, the limiting member passes through the passage (245), and the converting member cooperates with the converting matching member (242) to drive the lower position positioning member (24) to rotate by a preset angle about the axial direction, so that the limiting member and the limiting matching member (241) is upwardly limited in the axial direction.

3. The water outlet valve (2) with flow rate adjustment according to any one or more of claims 1-2, which further comprises a working spring, one end of the working spring is a fixed end, and the other end abuts the rotating push switch (23); when the rotating push switch (23) is in the lower position or the higher position, the working spring is always in a compressed state.

4. The water outlet valve (2) with flow rate adjustment according to any one or more of claims 1 to 3, **characterized in that**: the sealing member (26) comprises a pressure bearing base and a rubber cup seal, when the rotating push switch (23) moves the lower position, a pressure releasing hole of the pressure bearing base is closed by the central rod (22), a pressure of water stored in a pressure suppression chamber between the rubber cup seal and the valve body (21) increases, thereby driving the rubber cup seal to move downward in the axial direction of the valve body (21) to close the water outlet passage;
when the rotating push switch (23) moves to the higher position, the central rod (22) opens the pressure releasing hole of the rubber cup seal, and a pressure of water releasing from the pressure suppression chamber between the rubber cup seal and the valve body (21) decreases, thereby driving the rubber cup seal to move upward in the axial direction of the valve body (21) to open the water outlet passage ;
the rubber cup seal does not deform after the pressure releasing hole is opened.

5. The water outlet valve (2) with flow rate adjustment according to claim 4, **characterized in that**: the movable shaft (222) is interlocked to the pressure bearing base disposed with the rubber cup seal, and when the movable shaft (222) moves upward, the pressure bearing base drives the rubber cup seal to open the water outlet passage.

6. The water outlet valve (2) with flow rate adjustment according to claim 2, **characterized in that**: the lower position positioning member (24) is a rotating ratchet wheel (231); the rotating converting member (231) is a fixed ratchet wheel; the rotating converting member (231) and the converting matching member (242) define first ratchet wheel inclined surfaces.

7. The water outlet valve (2) with flow rate adjustment according to claim 6, **characterized in that**: an outer side wall of the rotating ratchet wheel (231) is separately disposed with ratchet tooth blocks in a circumferential direction, the passage is defined between two adjacent ratchet tooth blocks, and a side of the ratchet tooth blocks facing the fixed ratchet wheel (231) is disposed with the first ratchet wheel inclined surface.

8. The water outlet valve (2) with flow rate adjustment according to claim 7, **characterized in that**: the limiting member (232) and the limiting matching member (241) define second ratchet wheel inclined surfaces; and a side of the ratchet tooth blocks away from the rotating push switch (23) is disposed with the second ratchet wheel inclined surface.

9. The water outlet valve (2) with flow rate adjustment according to claim 8, **characterized in that**: the second ratchet wheel inclined surface is disposed on the fixed ratchet wheel and is disposed below the first ratchet wheel inclined surface in the axial direction.

10. The water outlet valve (2) with flow rate adjustment according to any one or more of claims 1 to 9, **characterized in that**: the sealing member (26) comprises a pressure bearing base and a rubber cup seal, and when the rotating push switch (22) moves to the lower position, a pressure releasing hole of the pressure bearing base is closed by the movable shaft (222), and a pressure of water stored in the pressure suppression chamber between the rubber cup seal and the valve body (21) increases, thereby driving the rubber cup seal to move downward along the axial direction of the valve body (21) to close the water outlet passage;
when the rotating push switch (22) moves to the higher position, the movable shaft (222) opens the pressure releasing hole of the rubber cup seal, and a pressure of water releasing from the pressure suppression chamber between the rubber cup seal and the valve body (21) decreases, thereby driving the rubber cup seal to move upward in the axial direction of the valve body (21) to open the water outlet passage; and
the rubber cup seal does not deform after the pressure releasing hole is opened

11. A faucet, comprising a faucet body (1) and a water outlet valve (2) with flow rate adjustment according to any one or more of claims 1-10 disposed on the faucet body (1).

## Patentansprüche

1. Ein Wasserauslassventil (2) mit Strömungsmengeneinstellung, welches einen Ventilkörper (21), eine Mittelstange (22), einen Drehdruckschalter (23), ein Strömungsmengeneinstellungsglied (25) und ein Dichtungsglied (26) aufweist;
der Drehdruckschalter (23) ist mit der Mittelstange (22) verriegelt und arbeitet mit dieser zusammen, und zwar in einer axialen Richtung, und der Drehdruckschalter (23) ist mit dem Strömungsmengeneinstellungsglied (25) um die axiale Richtung verriegelt; das Strömungsmengeneinstellungsglied (25) ermöglicht, dass eine Drehbewegung um die axiale Richtung in eine Auf-AbBewegung der Mittelstange (22) in der axialen Richtung umgewandelt wird;
wenn der Drehdruckschalter (23) die Mittelstange (22) antreibt, um sich in eine höhere Position oder eine untere Position zu bewegen, öffnet oder schließt das Dichtungsglied (26) einen Wasserauslassdurchlass des Ventilkörpers (21); wenn der Drehdruckschalter (23) oder das Strömungsmengeneinstellungsglied (25) sich dreht, treibt das Strömungsmengeneinstellungsglied (25) die Mittelstange (22) an, um sich aufwärts und abwärts in der axialen Richtung zu bewegen, und eine Wasserdurchlassfläche des Wasserauslassdurchlasses vergrößert oder verkleinert sich entsprechend; und
die Mittelstange (22), das Strömungsmengeneinstellungsglied (25) und der Drehdruckschalter (23) sind koaxial und von einer Innenseite zu einer Außenseite angeordnet,
**dadurch gekennzeichnet, dass** die Mittelstange (22) in einen Druckschaft (221) und einen bewegbaren Schaft (222) angeordnet ist; der bewegbare Schaft (222) von einer Wasseröffnungsfeder (29) umgeben ist, wenn der Drehdruckschalter (23) in der unteren Position ist, die Wasser-öffnungsfeder (29) zusammengedrückt ist, und
wobei der Druckschaft (221) von einer Wasserschließfeder (28) umgeben ist; wenn der Drehdruckschalter (23) in der unteren Position ist, der Druckschaft (22) an dem bewegbaren Schaft (222) anliegt, und die Wasserschließfeder (28) zusammengedrückt ist; eine elastische Rückstellkraft der Wasserschließfeder (28) größer als eine elastische Rückstellkraft der Wasseröffnungsfeder (29) ist.

2. Das Wasserauslassventil (2) mit Strömungsmengeneinstellung nach Anspruch 1, welches ferner ein Positionierungsglied der unteren Position (24) aufweist;
der Drehdruckschalter (23) bewegt sich zwischen der höheren Position und der unteren Position in der axialen Richtung; der Drehdruckschalter (23) weist ein Bedienungsglied (231) und ein Drehumwandlungsglied (232) auf; das Drehumwandlungsglied (232) weist ein Umwandlungsglied, das konfiguriert ist, um mit dem Positionierungsglied der unteren Position (24) zusammenzuarbeiten, und ein Begrenzungsglied, das konfiguriert ist, um mit dem Positionierungsglied der unteren Position (24) verriegelt zu sein, auf; das Positionierungsglied der unteren Position (24) weist ein Begrenzungspassglied (241) und ein Umwandlungspassglied (242), die oben und unten in der axialen Richtung angeordnet sind, und einen Durchgang (245), welcher in der axialen Richtung durchdringt, auf; und
wenn das Bedienungsglied (231) in der höheren Position ist, ist das Begrenzungsglied mit dem Durchgang (245) ausgerichtet, und das Umwandlungsglied ist von dem Umwandlungspassglied (242) durch einen voreingestellten Abstand in der axialen Richtung getrennt; wenn der Drehdruckschalter (23) in der unteren Position ist, geht das Begrenzungsglied durch den Durchgang (245) hindurch, und das Umwandlungsglied arbeitet mit dem Umwandlungspassglied (242) zusammen, um das Positionierungsglied der unteren Position (24) anzutreiben, um sich um einen voreingestellten Winkel um die axiale Richtung zu drehen, so dass das Begrenzungsglied und das Begrenzungspassglied (241) nach oben in der axialen Richtung begrenzt sind.

3. Das Wasserauslassventil (2) mit Strömungsmengeneinstellung nach einem oder mehreren der Ansprüche 1-2, welches ferner eine Arbeitsfeder aufweist, ein Ende der Arbeitsfeder ist ein festes Ende, und das andere Ende liegt an dem Drehdruckschalter (23) an; wenn der Drehdruckschalter (23) in der unteren Position oder der höheren Position ist, ist die Arbeitsfeder immer in einem zusammengedrückten Zustand.

4. Das Wasserauslassventil (2) mit Strömungsmengeneinstellung nach einem oder mehreren der Ansprüche 1 bis 3, **dadurch gekennzeichnet, dass**: das Dichtungsglied (26) eine Drucktragebasis und eine Gummimanschettendichtung aufweist, wenn sich der Drehdruckschalter (23) die untere Position bewegt, ist ein Druckablassloch der Drucktragebasis durch die Mittelstange (22) geschlossen, ein Druck von Wasser, welches in einer Druckunterdrückungskammer zwischen der Gummimanschettendichtung und dem Ventilkörper (21) gespeichert ist, steigt, dadurch wird die Gummimanschettendichtung angetrieben, um sich abwärts in der axialen Richtung des Ventilkörpers (21) zu bewegen, um den Wasserauslassdurchlass zu schließen;
wenn sich der Drehdruckschalter (23) zu der höheren Position bewegt, die Mittelstange (22) das Druckablassloch der Gummimanschettendichtung öffnet, und ein Druck von Wasser, welches von der Druckunterdrückungskammer zwischen der Gummimanschettendichtung und dem Ventilkörper (21) freigegeben wird, sinkt, dadurch wird die Gummimanschettendichtung angetrieben, sich aufwärts in der axialen Richtung des Ventilkörpers (21) zu bewegen, um den Wasserauslassdurchlass zu öffnen; die Gummimanschettendichtung verformt sich nicht, nachdem das Druckablassloch geöffnet ist.

5. Das Wasserauslassventil (2) mit Strömungsmengeneinstellung nach Anspruch 4, **dadurch gekennzeichnet, dass**: der bewegbare Schaft (222) mit der Drucktragebasis, welche mit der Gummimanschettendichtung angeordnet ist, verriegelt ist, und wenn sich der bewegbare Schaft (222) aufwärts bewegt, treibt die Drucktragebasis die Gummimanschettendichtung an, um den Wasserauslassdurchlass zu öffnen.

6. Das Wasserauslassventil (2) mit Strömungsmengeneinstellung nach Anspruch 2, **dadurch gekennzeichnet, dass**: das Positionierungsglied der unteren Position (24) ein Drehsperrklinkenrad (231) ist; das Drehumwandlungsglied (231) ein festes Sperrklinkenrad ist; das Drehumwandlungsglied (231) und das Umwandlungspassglied (242) erste Sperrklinkenradneigungsoberflächen definieren.

7. Das Wasserauslassventil (2) mit Strömungsmengeneinstellung nach Anspruch 6, **dadurch gekennzeichnet, dass**: eine äußere Seitenwand des Drehsperrklinkenrads (231) getrennt mit Sperrklinkenzahnblöcken in einer Umfangsrichtung angeordnet ist, der Durchgang zwischen zwei benachbarten Sperrklinkenzahnblöcken definiert ist, und eine Seite der Sperrklinkenzahnblöcke, welche zu dem festen Sperrklinkenrad (231) hinweisen, mit der ersten Sperrklinkenradneigungsoberfläche angeordnet ist.

8. Das Wasserauslassventil (2) mit Strömungsmengeneinstellung nach Anspruch 7, **dadurch gekennzeichnet, dass**: das Begrenzungsglied (232) und das Begrenzungspassglied (241) zweite Sperrklinkenradneigungsoberflächen definieren; und eine Seite der Sperrklinkenzahnblöcke, welche von dem Drehdruckschalter (23) entfernt sind, mit der zweiten Sperrklinkenradneigungsoberfläche angeordnet ist.

9. Das Wasserauslassventil (2) mit Strömungsmengeneinstellung nach Anspruch 8, **dadurch gekennzeichnet, dass**: die zweite Sperrklinkenradneigungsoberfläche auf dem festen Sperrklinkenrad angeordnet ist, und unter der ersten Sperrklinkenradneigungsoberfläche in der axialen Richtung angeordnet ist.

10. Das Wasserauslassventil (2) mit Strömungsmengeneinstellung nach einem oder mehreren der Ansprüche 1 bis 9, **dadurch gekennzeichnet, dass**: das Dichtungsglied (26) eine Drucktragebasis und eine Gummimanschettendichtung aufweist, und wenn sich der Drehdruckschalter (23) zu der unteren Position bewegt, ist ein Druckablassloch der Drucktragebasis durch den bewegbaren Schaft (222) geschlossen, und ein Druck von Wasser, welches in einer Druckunterdrückungskammer zwischen der Gummimanschettendichtung und dem Ventilkörper (21) gespeichert ist, steigt, dadurch wird die Gummimanschettendichtung angetrieben, um sich abwärts entlang der axialen Richtung des Ventilkörpers (21) zu bewegen, um den Wasserauslassdurchlass zu schließen;
wenn sich der Drehdruckschalter (22) zu der höheren Position bewegt, der bewegbare Schaft (222) das Druckablassloch der Gummimanschettendichtung öffnet, und ein Druck von Wassers, welches von der Druckunterdrückungskammer zwischen der Gummimanschettendichtung und dem Ventilkörper (21) freigegeben wird, sinkt, dadurch wird die Gummimanschettendichtung angetrieben, sich aufwärts in der axialen Richtung des Ventilkörpers (21) zu bewegen, um den Wasserauslassdurchlass zu öffnen; und
die Gummimanschettendichtung verformt sich nicht, nachdem das Druckablassloch geöffnet ist.

11. Ein Hahn, der einen Hahnkörper (1) und ein Wasserauslassventil (2) mit Strömungsmengeneinstellung nach einem oder mehreren der Ansprüche 1-10, welches an dem Hahnkörper (1) angeordnet ist, aufweist.

## Revendications

1. Vanne de sortie d'eau (2) avec ajustement de débit, comportant un corps de vanne (21), une tige centrale (22), un commutateur à poussoir rotatif (23), un organe d'ajustement de débit (25) et un organe d'étanchéité (26) ;
le commutateur à poussoir rotatif (23) est imbriqué et coopère avec la tige centrale (22) dans une direction axiale, et le commutateur à poussoir rotatif (23) est imbriqué avec l'organe d'ajustement de débit (25) autour de la direction axiale ; l'organe d'ajustement de débit (25) permet de convertir un mouvement de rotation autour de la direction axiale en un mouvement de montée-descente de la tige centrale (22) dans la direction axiale ;
lorsque le commutateur à poussoir rotatif (23) entraîne la tige centrale (22) pour se déplacer vers une position plus haute ou plus basse, l'organe d'étanchéité (26) ouvre ou ferme un passage de sortie d'eau du corps de vanne (21) ; lorsque le commutateur à poussoir rotatif (23) ou l'organe d'ajustement de débit (25) tourne, l'organe d'ajustement de débit (25) entraîne la tige centrale (22) pour se déplacer vers le haut et vers le bas dans la direction axiale, et une aire de passage d'eau du passage de sortie d'eau devient plus grande ou plus petite en conséquence ; et
la tige centrale (22), l'organe d'ajustement de débit (25) et le commutateur à poussoir rotatif (23) sont coaxiaux et disposés d'un côté intérieur vers un côté extérieur,
**caractérisée en ce que**
la tige centrale (22) est agencée dans un arbre de pression (221) et un arbre mobile (222) ;
l'arbre mobile (222) est entouré par un ressort d'ouverture d'eau (29), lorsque le commutateur à poussoir rotatif (23) est dans la position inférieure, le ressort d'ouverture d'eau (29) est comprimé, et
dans laquelle l'arbre de pression (221) est entouré par un ressort de fermeture d'eau (28) ; lorsque le commutateur à poussoir rotatif (23) est dans la position inférieure, l'arbre de pression (22) vient en butée contre l'arbre mobile (222) et le ressort de fermeture d'eau (28) est comprimé ; une force de rappel élastique du ressort de fermeture d'eau (28) est supérieure à une force de rappel élastique du ressort d'ouverture d'eau (29).

2. Vanne de sortie d'eau (2) avec ajustement de débit selon la revendication 1, qui comporte en outre un organe de positionnement de position inférieure (24) ;
le commutateur à poussoir rotatif (23) se déplace entre la position supérieure et la position inférieure dans la direction axiale ; le commutateur à poussoir rotatif (23) comporte un organe de fonctionnement (231) et un organe de conversion rotatif (232) ; l'organe de conversion rotatif (232) comporte un organe de conversion configuré pour coopérer avec l'organe de positionnement de position inférieure (24) et un organe de limitation configuré pour être verrouillé à l'organe de positionnement de position inférieure (24) ; l'organe de positionnement de position inférieure (24) comporte un organe de correspondance de limitation (241) et un organe de correspondance de conversion (242) disposés vers le haut et vers le bas dans la direction axiale et un passage (245) pénétrant dans la direction axiale ; et
lorsque l'organe d'actionnement (231) est dans la position supérieure, l'organe de limitation est aligné sur le passage (245), et l'organe de conversion est séparé de l'organe de correspondance de conversion (242) d'une distance prédéfinie dans la direction axiale ; lorsque le commutateur à poussoir rotatif (23) est dans la position inférieure, l'organe de limitation passe à travers le passage (245), et l'organe de conversion coopère avec l'organe de correspondance de conversion (242) pour entraîner l'organe de positionnement de position inférieure (24) à tourner d'un angle prédéfini autour de la direction axiale, de sorte que l'organe de limitation et l'organe de correspondance de limitation (241) soient limités vers le haut dans la direction axiale.

3. Vanne de sortie d'eau (2) avec ajustement de débit selon une ou plusieurs des revendications 1 et 2, qui comporte en outre un ressort de travail, une extrémité du ressort de travail étant une extrémité fixe, et l'autre extrémité venant en butée contre le commutateur à poussoir rotatif (23) ; lorsque le commutateur à poussoir rotatif (23) est dans la position inférieure ou la position supérieure, le ressort de travail est toujours dans un état comprimé.

4. Vanne de sortie d'eau (2) avec ajustement de débit selon une ou plusieurs des revendications 1 à 3, **caractérisée en ce que** : l'organe d'étanchéité (26) comporte une base de palier de pression et un joint à coupelle en caoutchouc, lorsque le commutateur à poussoir rotatif (23) déplace la position inférieure, un trou de libération de pression de la base de palier de pression est fermé par la tige centrale (22), une pression d'eau stockée dans une chambre de suppression de pression entre le joint à coupelle en caoutchouc et le corps de vanne (21) augmente, entraînant ainsi le joint à coupelle en caoutchouc à se déplacer vers le bas dans la direction axiale du corps de vanne (21) pour fermer le passage de sortie d'eau ;
lorsque le commutateur à poussoir rotatif (23) se déplace vers la position supérieure, la tige centrale (22) ouvre le trou de libération de pression du joint à coupelle en caoutchouc, et une pression d'eau libérée de la chambre de suppression de pression entre le joint à coupelle en caoutchouc et le corps de vanne (21) diminue, entraînant ainsi le joint à coupelle en caoutchouc à se déplacer vers le haut dans la direction axiale du corps de vanne (21) pour ouvrir le passage de sortie d'eau ;
le joint à coupelle en caoutchouc ne se déforme pas après l'ouverture du trou de libération de pression.

5. Vanne de sortie d'eau (2) avec ajustement de débit selon la revendication 4, **caractérisée en ce que** : l'arbre mobile (222) est imbriqué avec la base de palier de pression disposée avec le joint à coupelle en caoutchouc et, lorsque l'arbre mobile (222) se déplace vers le haut, la base de palier de pression entraîne le joint à coupelle en caoutchouc pour ouvrir le passage de sortie d'eau.

6. Vanne de sortie d'eau (2) avec ajustement de débit selon la revendication 2, **caractérisée en ce que** : l'organe de positionnement de position inférieure (24) est une roue à cliquet rotative (231) ; l'organe de conversion rotatif (231) est une roue à cliquet fixe ; l'organe de conversion rotatif (231) et l'organe de correspondance de conversion (242) définissent des premières surfaces inclinées de roue à cliquet.

7. Vanne de sortie d'eau (2) avec ajustement de débit selon la revendication 6, **caractérisée en ce que** : une paroi latérale extérieure de la roue à cliquet rotative (231) est disposée séparément avec des blocs de dents de cliquet dans une direction circonférentielle, le passage est défini entre deux blocs de dents de cliquet adjacents, et un côté des blocs de dents de cliquet orienté vers la roue de cliquet fixe (231) est disposé avec la première surface inclinée de roue de cliquet.

8. Vanne de sortie d'eau (2) avec ajustement de débit selon la revendication 7, **caractérisée en ce que** : l'organe de limitation (232) et l'organe de correspondance de limitation (241) définissent des secondes surfaces inclinées de roue à cliquet ; et un côté des blocs de dents de cliquet à l'écart du commutateur à poussoir rotatif (23) est disposé avec la seconde surface inclinée de roue à cliquet.

9. Vanne de sortie d'eau (2) avec ajustement de débit selon la revendication 8, **caractérisée en ce que** : la seconde surface inclinée de roue à cliquet est disposée sur la roue à cliquet fixe et est disposée sous la première surface inclinée de roue à cliquet dans la direction axiale.

10. Vanne de sortie d'eau (2) avec ajustement de débit selon une ou plusieurs des revendications 1 à 9, **caractérisée en ce que** : l'organe d'étanchéité (26) comporte une base de palier de pression et un joint à coupelle en caoutchouc et, lorsque le commutateur à poussoir rotatif (22) se déplace vers la position inférieure, un trou de libération de pression de la base de palier de pression est fermé par l'arbre mobile (222) et une pression d'eau stockée dans la chambre de suppression de pression entre le joint à coupelle en caoutchouc et le corps de vanne (21) augmente, entraînant ainsi le joint à coupelle en caoutchouc à se déplacer vers le bas le long de la direction axiale du corps de vanne (21) pour fermer le passage de sortie d'eau ;
lorsque le commutateur à poussoir rotatif (22) se déplace vers la position supérieure, l'arbre mobile (222) ouvre le trou de libération de pression du joint à coupelle en caoutchouc, et une pression d'eau libérée de la chambre de suppression de pression entre le joint à coupelle en caoutchouc et le corps de vanne (21) diminue, entraînant ainsi le joint à coupelle en caoutchouc à se déplacer vers le haut dans la direction axiale du corps de vanne (21) pour ouvrir le passage de sortie d'eau ; et
le joint à coupelle en caoutchouc ne se déforme pas après l'ouverture du trou de libération de pression.

11. Robinet, comportant un corps de robinet (1) et une vanne de sortie d'eau (2) avec ajustement de débit selon une ou plusieurs des revendications 1 à 10 disposée sur le corps de robinet (1).
